# EUROPÄISCHE PATENTSCHRIFT

(11) **EP 1 414 660 B1**
(45) Veröffentlichungstag und Bekanntmachung des Hinweises auf die Patenterteilung: **08.12.2004**
(21) Anmeldenummer: 02764831.0
(22) Anmeldetag: 05.08.2002
(51) Int. Cl.: B60J 7/20

(54) **VERDECKKASTEN ZUR AUFNAHME EINES VERSTELLBAREN FAHRZEUGVERDECKS**
CABRIOLET-TOP COMPARTMENT FOR HOUSING AN ADJUSTABLE VEHICLE CABRIOLET-TOP
COMPARTIMENT A CAPOTE CON U POUR ACCUEILLIR UNE CAPOTE DE VEHICULE MOBILE

(30) Priorität: 09.08.2001 DE 10138163
(43) Veröffentlichungstag der Anmeldung: 06.05.2004
(73) Patentinhaber: CTS Fahrzeug-Dachsysteme GmbH, 21079 Hamburg (DE)
(72) Erfinder: HOLST, Christian, 22605 Hamburg (DE); HAHN, Gerald, D-21255 Wistedt (DE); ROSCHAT, Bernd, 25704 Nordermeldorf (DE)
(74) Vertreter: Müller, Gottfried
(86) Internationale Anmeldenummer: PCT/EP2002/008714
(87) Internationale Veröffentlichungsnummer: WO 2003/013890

(56) Entgegenhaltungen:
- DE-A- 19 834 850
- DE-U- 29 809 006
- DE-U- 29 809 007
- FR-A- 2 796 901
- PATENT ABSTRACTS OF JAPAN vol. 2000, no. 06, 22. September 2000 (2000-09-22) & JP 2000 085365 A (TOYOTA MOTOR CORP), 28. März 2000 (2000-03-28)

## Beschreibung

Die Erfindung bezieht sich auf einen Verdeckkasten zur Aufnahme eines verstellbaren Fahrzeugverdecks nach dem Oberbegriff des Anspruches 1.

In der Druckschrift DE 197 12 967 A1 wird ein Verdeckkasten beschrieben, welcher sich an die Rückseite des Fahrzeuginnenraumes anschließt und zur Aufnahme eines verstellbaren Fahrzeugdaches in geöffneter Position ausgebildet ist. Der Verdeckkasten ist von einer Deckelanordnung zu verschließen, welche zur Freigabe des Verdeckkastens geöffnet werden kann. Der Verdeckkasten bildet einen eigenständigen Ablageraum und ist separat vom Kofferraum des Fahrzeuges ausgebildet. Hierdurch wird jedoch das zur freien Verfügung stehende Stauvolumen im Kofferraum auch für den Fall reduziert, dass das Fahrzeugdach geschlossen ist und der Verdeckkasten dementsprechend leer ist.

Aus der Druckschrift DE 198 34 850 A1 ist es bekannt, einen Verdeckkasten zur Aufnahme eines verstellbaren Fahrzeugverdecks mit einem verstellbaren Kastenboden auszustatten, der zwischen einer angehobenen Position und einer abgesenkten Position zu verstellen ist, wobei die angehobene Position der Schließstellung des Fahrzeugverdecks und die abgesenkte Position der Ablagestellung des Fahrzeugverdecks zugeordnet ist, in welcher das Verdeck im Verdeckkasten aufgenommen ist. Bei angehobener Position ist dagegen der nutzbare Kofferraum vergrößert. Zum Anheben und Absenken des Bodens ist eine Kastenbodenkinematik vorgesehen, die Bestandteil der Verstellkinematik des Verdeckes ist. Auf diese Weise wird eine Kopplung zwischen der Verdeckbewegung und der Absenk- bzw. Anhebebewegung des Verdeckkastenbodens erzielt.

Nachteilig bei dieser Vorrichtung ist jedoch, dass die abgesenkte Position des Bodens, in welcher der Verdeckkasten sein maximales Volumen einnimmt, erst zum Ende der Ablagebewegung des Fahrzeugverdeckes erreicht wird. Der Verdeckkasten muss aus diesem Grund verhältnismäßig groß dimensioniert sein, da bei einer kontinuierlichen Ablagebewegung bereits vor dem vollständigen Verstauen sämtlicher Verdeckteile ein Großteil des Verdeckes im Verdeckkasten Platz finden muss. Die kontinuierlich an die Ablagebewegung des Verdeckes gekoppelte Absenkbewegung des Verdeckkastenbodens erfordert aus diesem Grund einen verhältnismäßig groß dimensionierten Verdeckkasten, wodurch der frei nutzbare Kofferraum eingeschränkt wird.

Ein Verdeckkasten mit absenkbarem Kastenboden wird auch in der DE 298 09 007 U1 beschrieben. Eine Kopplung der Kastenbodenkinematik mit dem Fahrzeugverdeck wird in dieser Druckschrift aber nicht offenbart. Die Vertikalbewegung des Kastenbodens wird mit Hilfe eines Bowdenzugs durchgeführt, der entweder vom Armaturenbrett aus fernausgelöst werden kann oder über ein Steuerelement bestätigt wird, das während des Verdecköffnens und - schließens oder des Öffnens oder Schließens des Verdeckkastendeckels betätigt wird. Eine unmittelbare Kopplung zwischen der Verdeckkinematik und der Kinematik zur Verstellung des Verdeckkastenbodens ist dem aber nicht zu entnehmen.

Der Erfindung liegt das Problem zugrunde, insbesondere in geschlossener Position eines verstellbaren Fahrzeugdaches ein möglichst großes Stauvolumen für Gepäck zu schaffen. Das Stauvolumen soll zweckmäßig ohne manuellen Eingriff zu vergrößern sein.

Dieses Problem wird erfindungsgemäß mit den Merkmalen des Anspruches 1 gelöst. Die Unteransprüche geben zweckmäßige Weiterbildungen an.

Der Boden des Verdeckkastens verfügt über eine Kastenbodenkinematik, die eine Verstellung des Kastenbodens zwischen einer der geschlossenen Position des Fahrzeugverdecks zugeordneten angehobenen Lage und einer der geöffneten Position des Fahrzeugverdecks zugeordneten abgesenkten Lage erlaubt. In der angehobenen Lage des Kastenbodens wird der Kofferraum durch den Verdeckkasten praktisch nicht beeinträchtigt, wodurch ein maximal mögliches Stauvolumen im Kofferraum gegeben ist. Zur Ablage des Verdecks im Verdeckkasten wird der Kastenboden abgesenkt, wodurch der erforderliche Ablageraum für das Verdeck geschaffen wird.

Die Kastenbodenkinematik, über die der Kastenboden zu verstellen ist, ist mit dem Fahrzeugverdeck in der Weise gekoppelt, dass bei der Überführung des Fahrzeugverdecks von der geschlossenen in die geöffnete Position der Kastenboden selbsttätig abgesenkt wird. Weiterhin ist vorgesehen, dass der abgesenkte Kastenboden von seiner Kastenbodenkinematik entkoppelbar ist.

Hierdurch wird die Möglichkeit eröffnet, zu Beginn der Öffnungsbewegung des Fahrzeugverdeckes den Kastenboden abzusenken und dadurch einen hinreichend großen Ablageraum im Verdeckkasten zur Aufnahme des Fahrzeugverdeckes zu schaffen. Die Absenkung erfolgt während der Anfangs-Öffnungsbewegung des Fahrzeugverdeckes. Nach der Absenkbewegung des Kastenbodens wird dieser von seiner Kastenbodenkinematik entkoppelt, so dass zwar gegebenenfalls die Kastenbodenkinematik auf Grund ihrer Verbindung zum Fahrzeugverdeck und der anhaltenden Öffnungsbewegung des Fahrzeugverdecks eine weitere Stellbewegung ausführen kann, diese Stellbewegung jedoch nicht mehr auf den Kastenboden übertragen wird, so dass dieser unbeeinflusst von der aktuellen Lage der Kastenbodenkinematik in seiner abgesenkten Position verharren kann.

Die Absenkung des Kastenbodens zu einem frühen Zeitpunkt im Bewegungsablauf des Fahrzeugverdecks bietet außerdem den Vorteil, dass im Falle eines die Absenkbewegung des Bodens blockierenden Gegenstandes im Kofferraum des Fahrzeuges der gesamte Bewegungsablauf bereits zu einem Zeitpunkt abgebrochen werden kann, in welchem das Verdeck im Wesentlichen noch geschlossen ist. Gleiches gilt auch für die Abdeckung des Verdeckkastens, welche bis zum Erreichen des Kastenbodens in die abgesenkte Position geschlossen bleiben kann.

Beim Schließen des Fahrzeugverdecks läuft der gesamte Vorgang in umgekehrter Richtung ab. Zunächst bleiben die Kastenbodenkinematik und der Kastenboden entkoppelt, so dass der Kastenboden beim Herausheben des Fahrzeugverdecks aus der Ablageposition im Verdeckkasten in seiner abgesenkten Position verbleibt. Im letzten Bewegungsabschnitt des Schließvorganges des Fahrzeugverdecks wird die Kastenbodenkinematik wieder an den Kastenboden angekoppelt, wodurch der Kastenboden in der letzten Phase der Schließbewegung des Fahrzeugverdecks in seine angehobene Position überführt wird, in welcher der Kofferraum in nur geringst möglicher Weise beeinträchtigt ist.

Die Kopplung zwischen der Kastenbodenkinematik und dem Fahrzeugverdeck bietet den Vorteil, dass für die Verstellung des Kastenbodens kein separater Antrieb erforderlich ist. Die Absenkbewegung des Kastenbodens kann außerdem durch das Eigengewicht des Kastenbodens unterstützt werden.

Zweckmäßig ist die Entkopplung von Kastenbodenkinematik und Kastenboden an die Öffnungsbewegung des Verdeckkastendeckels gebunden. Der den Verdeckkasten verschließende Verdeckkastendeckel muss bei der Überführung des Fahrzeugverdecks zwischen geschlossener und geöffneter Position zur Freigabe des Verdeckkastens geöffnet werden; diese Öffnungsbewegung kann für die Entkopplung von Kastenbodenkinematik und Kastenboden herangezogen werden. Nach der Entkopplung des Kastenbodens von seiner Kinematik verbleibt der Boden ungeachtet einer weiteren Bewegung des Fahrzeugverdecks in seiner abgesenkten Position. Beim Schließen des Verdeckkastendeckels werden Kastenboden und Kastenbodenkinematik vorzugsweise wieder aneinander gekoppelt.

Kastenbodenkinematik und Kastenboden sind vorteilhaft schwenkbar aneinander gekoppelt, wobei die Kinematik zweckmäßig über einen lösbaren Arretierbolzen mit dem Kastenboden verriegelbar ist, so dass zwischen Kinematik und Kastenboden kein Relativfreiheitsgrad besteht und jede über das Fahrzeugverdeck auf die Kastenbodenkinematik zu übertragende Stellbewegung unmittelbar auf den Kastenboden weitergeleitet wird. In entkoppeltem Zustand ist der Arretierbolzen zwischen Kastenbodenkinematik und Kastenboden zurückgezogen, so dass die Verriegelung aufgehoben ist und die Kastenbodenkinematik um ihre Schwenkachse relativ zum Kastenboden verschwenken kann. Eine weitere Bewegung des Fahrzeugverdecks wird daher zwar eine Stellbewegung der Kastenbodenkinematik auslösen; diese Stellbewegung der Kinematik wird jedoch nicht weiter auf den Kastenboden übertragen.

Zwischen Verdeckkastendeckel und Arretierbolzen ist bevorzugt zur Umsetzung der Öffnungsbewegung des Deckels in eine Entkopplungsbewegung des Arretierbolzens ein Übertragungsglied vorgesehen, insbesondere ein Bowdenzug, welcher die Bewegung des Verdeckkastendeckels in eine Rückzugsbewegung des Arretierbolzens aus seiner Arretierstellung umsetzt. In dieser Ausführung wird die Kastenbodenbewegung insgesamt von zwei Bauteilbewegungen beeinflusst: zum einen von der Verdeckbewegung bei der Überführung zwischen geschlossener und geöffneter Position, zum anderen von der Verdeckkastendeckelbewegung beim Öffnen des Verdeckkastens, wobei diese beiden Bewegungen vorteilhaft zeitlich aufeinander abgestimmt sind, um für den Fall, dass in geschlossener Position das Fahrzeugverdeck auf dem Verdeckkastendeckel aufsitzt und diesen blockiert, das Verdeck zunächst angehoben wird, um die Öffnungsbewegung des Verdeckkastendeckels zu ermöglichen.

Der Kastenboden ist bevorzugt um eine karosseriefeste Querachse schwenkbar gelagert und steht in seiner angehobenen Lage näherungsweise senkrecht im Fahrzeug und in abgesenkter Lage näherungsweise horizontal. Die Kastenbodenkinematik kann in die abgesenkte Lage des Kastenbodens kraftbeaufschlagt sein, insbesondere durch das Eigengewicht des Kastenbodens und/oder durch ein Federelement.

Zur Übertragung und Umsetzung der Verstellbewegung des Fahrzeugverdecks in die Absenkbewegung des Kastenbodens kann ein der Kastenbodenkinematik zugeordneter und schwenkbar an der Fahrzeugkarosserie gelagerter Antriebslenker vorgesehen sein, an welchem vorteilhaft ein Stellglied angreift, das anderenends mit einem beweglichen Bauteil des Fahrzeugverdecks verbunden ist und in Schließposition des Fahrzeugverdecks den Kastenboden entgegen der auf ihn wirkenden Feder- bzw. Gewichtskraft in seiner angehobenen Lage hält. Das Stellglied ist beispielsweise als Bowdenzug ausgeführt.

Weitere Vorteile und zweckmäßige Ausführungen sind den weiteren Ansprüchen, der Figurenbeschreibung und den Zeichnungen zu entnehmen. Es zeigen:
- Fig. 1a bis 1d: eine perspektivische Ansicht auf ein verstellbares Fahrzeugverdeck und einen Verdeckkasten mit einem Kastenboden und einem Verdeckkastendeckel in verschiedenen Positionen bei der Überführung des Verdecks zwischen Schließstellung und geöffneter Stellung,
- Fig. 2: eine Seitenansicht auf die Kinematik des Fahrzeugverdecks und des Verdeckkastens,
- Fig. 3: eine vergrößerte Ansicht der Kastenbodenkinematik,
- Fig. 4: eine perspektivische Darstellung der Kastenbodenkinematik einschließlich eines Arretierbolzens zwischen dem Kastenboden und einem Bauteil der Kastenbodenkinematik,
- Fig. 5: der Arretierbolzen in vergrößerter Ansicht in Arretierstellung.

In den folgenden Figuren sind gleiche Bauteile mit gleichen Bezugszeichen versehen.

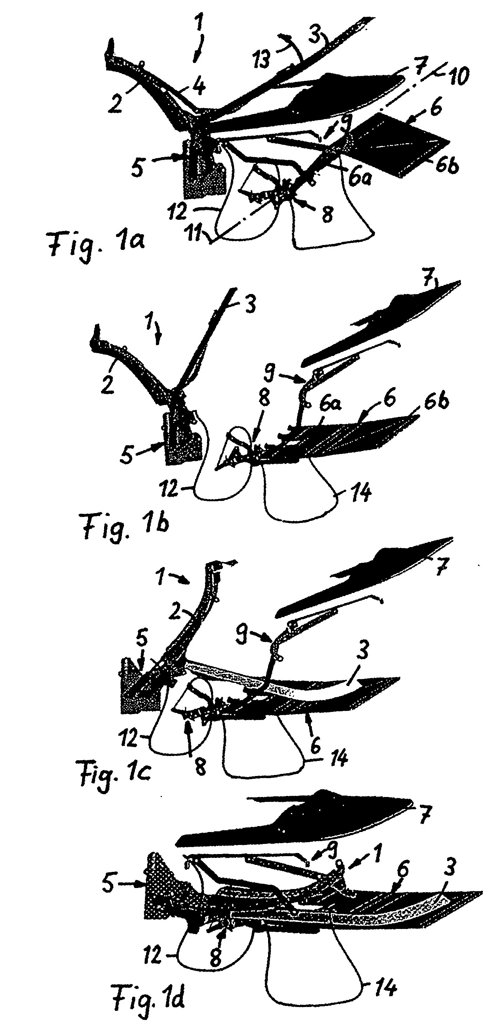

Bezug nehmend auf die Fig. 1a bis 1d wird zunächst der grundlegende Bewegungsablauf bei der Verstellung des Fahrzeugverdeckes zwischen geschlossener und geöffneter Position und des Verdeckkastens einschließlich Kastenboden und Verdeckkastendeckel beschrieben.

Das Fahrzeugverdeck 1 ist im gezeigten Ausführungsbeispiel als Softtop mit einem Verdeckgestänge, bestehend aus einer Mehrzahl beweglicher Gestängeteile, sowie einem von dem Verdeckgestänge getragenen Verdeckbezugstoff ausgeführt. Alternativ zu einem Softtop kommt aber auch ein Hardtop in Betracht.

Von dem Verdeckgestänge sind in den Fig. 1a bis 1d ein Hauptlenker 2 mit einer Verdeckkinematik 5 sowie ein hinterer Spannbügel 3 dargestellt, wobei der Spannbügel 3 in geschlossener Position des Fahrzeugverdeckes auf dem Verdeckkastendeckel bzw. dem Kofferraumdeckel aufliegt und für die notwendige Stoffspannung im Bezugstoff des Verdecks sorgt. Der Spannbügel 3 wird über ein Sturmgestänge 4 in seiner geschlossenen Position gehalten. Das gesamte Verdeckgestänge ist über die Verdeckkinematik 5 zwischen geschlossener Position des Verdecks und geöffneter Position zu verstellen.

Das Fahrzeugverdeck 1 ist in geöffneter Position in einem Verdeckkasten zu verstauen, welcher sich nach hinten an den Fahrzeuginnenraum anschließt und von dem in den Figuren ein Kastenboden 6, ein Verdeckkastendeckel 7 sowie eine Verdeckkastenkinematik, bestehend aus einer Kastenbodenkinematik 8 und einer Verdeckkastendeckelkinematik 9, dargestellt sind. Der Kastenboden 6 ist zweckmäßig zweiteilig mit einem ersten Bodenteil 6a und einem zweiten Bodenteil 6b ausgeführt, wobei die beiden Bodenteile 6a und 6b schwenkbar aneinander gekoppelt sind und um eine Schwenkachse 10 zueinander verdrehbar sind, die quer zur Fahrzeuglängsrichtung verläuft. Der Kastenboden 6 ist insgesamt am ersten Bodenteil 6a im Bereich der Kastenbodenkinematik 8 schwenkbar um eine karosseriefeste Schwenkachse 11 gelagert, welche ebenfalls quer zur Fahrzeuglängsrichtung verläuft. Die beiden Bodenteile 6a und 6b des Kastenbodens 6 liegen in abgesenkter Lage näherungsweise in einer gemeinsamen horizontalen Ebene.

Die Kastenbodenkinematik 8 ermöglicht eine Absenkung des Kastenbodens 6 aus einer der geschlossenen Position des Fahrzeugverdecks 1 zugeordneten angehobenen, aufrechten Lage in eine in den Fig. 1b bis 1d dargestellte abgesenkte, horizontale Lage, in der der Kastenboden 6 zweckmäßig so weit innerhalb des Kofferraumes des Fahrzeuges abgesenkt ist, dass das Fahrzeugverdeck 1 im Verdeckkasten verstaut werden kann.

In Fig. 1a ist der Kastenboden 6 in einer Zwischenposition zwischen angehobener und abgesenkter Lage dargestellt. In angehobener Lage ist das erste Bodenteil 6a, welches unmittelbar mit der Kastenbodenkinematik 8 gekoppelt ist, vorteilhaft in eine näherungsweise vertikale Position aufgestellt. Das zweite Bodenteil 6b ist hierbei insbesondere um seine Schwenkachse 10 relativ zum ersten Bodenteil 6a um 180° verschwenkt, so dass beide Bodenteile 6a und 6b in vertikaler Lage Seite an Seite aneinander liegen.

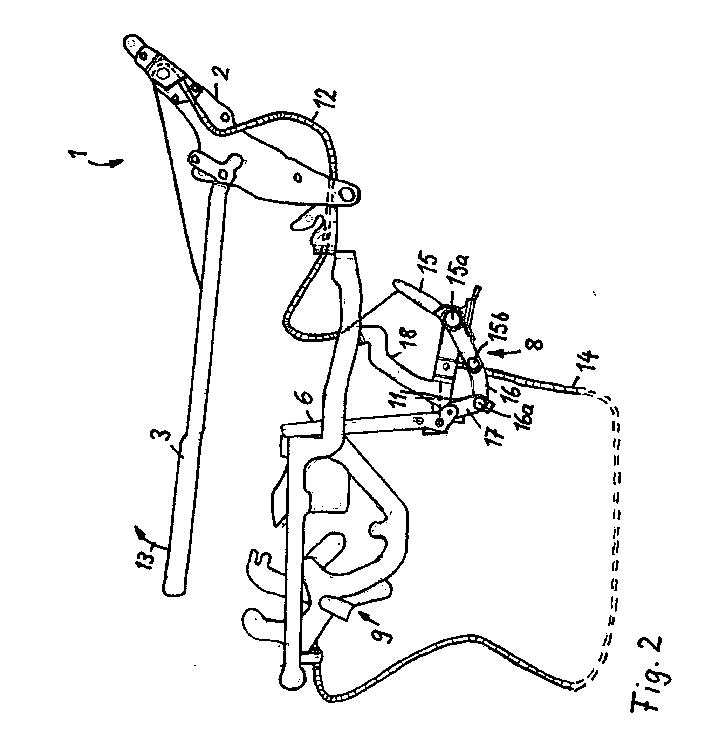

Die Überführung des Kastenbodens 6 aus seiner angehobenen Lage in die abgesenkte Lage ist an die Uberführungsbewegung des Fahrzeugverdecks 1 aus der geschlossenen Position in die geöffnete bzw. in die Stauposition gekoppelt. Hierfür ist zwischen einem Bauteil des Fahrzeugverdecks 1 bzw. der Verdeckkinematik 5 und der Kastenbodenkinematik 8 ein als Bowdenzug 12 ausgebildetes Stellglied vorgesehen, welches zu Beginn der Öffnungsbewegung des Fahrzeugverdeckes 1 die Absenkbewegung des Kastenbodens 6 auslöst. Der Kastenboden 6 ist in seiner angehobenen Lage in Richtung seiner abgesenkten Lage kraftbeaufschlagt, wird jedoch in der angehobenen Lage bei geschlossenem Fahrzeugverdeck 1 von dem Bowdenzug 12 gehalten. Zusätzlich kann eine in Fig. 2 zwischen zwei Bauteilen der Kastenbodenkinematik 8 herrschende Strecklage die angehobene Position des Kastenbodens stabilisieren.

Der Bowdenzug 12 ist zweckmäßig an die Bewegung des Spannbügels 3 gekoppelt, wobei ein Anheben des Spannbügels 3 aus seiner auf dem Verdeckkastendeckel 7 aufliegenden Position nach vorne in Pfeilrichtung 13 die Spannung im Bowdenzug 12 löst bzw. verringert, woraufhin der Kastenboden 6 sowie die Kastenbodenkinematik 8 unter der Einwirkung der auf den Kastenboden in seine abgesenkte Position wirkenden Kraft um die fahrzeugfeste Schwenkachse 11 nach unten abgesenkt wird. Der Kastenboden 6 erreicht seine untere, abgesenkte Lage, sobald der Spannbügel 3 die in Fig. 1b dargestellte aufrechte Position erreicht. In dieser Position befinden sich insbesondere der Hauptlenker 2 sowie die hiermit verbundenen Gestängeteile und der Großteil des Verdeckbezugstoffes noch in der geschlossenen Verdeckposition.

Nach dem Überführen des Spannbügels 3 in die aufrechte Position unter gleichzeitiger Absenkung des Kastenbodens 6 wird der Verdeckkastendeckel 7 über eine Betätigung der Verdeckkastendeckelkinematik 9 aus seiner den Verdeckkasten abdeckenden Schließposition in eine den Verdeckkasten freigebenden Öffnungsposition überführt. Der Verdeckkastendeckel 7 bzw. die Verdeckkastendeckelkinematik 9 sind über einen weiteren Bowdenzug 14, der die Funktion eines Bewegungsübertragungsgliedes einnimmt, mit einer Arretiereinrichtung gekoppelt, über die die Kastenbodenkinematik 8 mit dem Kastenboden 6 zu arretieren bzw. zu verriegeln ist, um eine Relativbewegung zwischen diesen Bauteilen zu unterbinden. Die Kastenbodenkinematik 8 ist schwenkbar am Kastenboden 6 gelagert und zur Überführung zwischen angehobener und abgesenkter Lage des Kastenbodens über die Arretiereinrichtung fest mit dem Kastenboden verbunden, so dass die über den ersten Bowdenzug 12 zu übertragende, aus der Stellbewegung des Spannbügels 3 resultierende Stellbewegung auf die Kastenbodenkinematik 8 unmittelbar in eine Schwenkbewegung des Kastenbodens zwischen dessen angehobener und dessen abgesenkter Lage übertragen wird.

Wird nunmehr durch die Bewegung des Verdeckkastendeckels 7 und die Übertragung über den zweiten Bowdenzug 14 die Arretiereinrichtung aus ihrer Arretierstellung gelöst, so kann die Kastenbodenkinematik 8 frei um ihre Schwenkachse relativ zum Kastenboden 6 verschwenkt werden, wobei aufgrund der Entkopplung die Bewegung der Kastenbodenkinematik keine Bewegung des Kastenbodens zur Folge hat, so dass jegliche Stellbewegung über den ersten Bowdenzug 12 ohne Einfluss auf die abgesenkte Position des Kastenbodens 6 ist. Der Kastenboden 6 bleibt daher über den gesamten weiteren Bewegungsablauf des Fahrzeugverdecks 1 in seiner abgesenkten Position.

In der in Fig. 1c dargestellten Zwischenlage ist der Spannbügel 3 bereits im Verdeckkasten abgelegt und liegt auf dem Kastenboden 6 auf. Der Hauptlenker 2 des Fahrzeugverdecks 1 ist um seine karosseriefeste Schwenkachse nach hinten in Richtung des Verdeckkastens verschwenkt. Der Verdeckkastendeckel 7 verbleibt zunächst in seiner geöffneten Position, bis sämtliche Bauteile des Fahrzeugverdecks 1 im Verdeckkasten verstaut sind.

Fig. 1d stellt die geöffnete Position des Fahrzeugverdeckes 1 dar, in der das Fahrzeugverdeck im Verdeckkasten abgelegt ist. Der Verdeckkastendeckel 7 ist wieder in seine geschlossene Position zurückversetzt worden. Hierdurch wird zwar die Kastenbodenkinematik 8 wieder an den Kastenboden 6 angekoppelt; dies bleibt aber aufgrund der stationären Ablage des Fahrzeugverdecks 1 im Verdeckkasten ohne Einfluss auf die Position der Kastenbodens.

Beim Schließen des Fahrzeugverdecks läuft der Vorgang in umgekehrter Richtung ab. Zunächst wird der Verdeckkastendeckel 7 wieder geöffnet, damit das Fahrzeugverdeck aus seiner im Verdeckkasten verstauten Position herausgehoben werden kann. Durch die Öffnungsbewegung des Verdeckkastendeckels wird die Kastenbodenkinematik 8 von dem Kastenboden 6 entkoppelt. Nach der Öffnung des Verdeckkastendeckels wird die Verdeckkinematik 5 betätigt und das Fahrzeugverdeck 1 aus dem Verdeckkasten herausgehoben, wobei diese Bewegung auf Grund der Entkopplung von Kastenbodenkinematik und Kastenboden zunächst ohne Einfluss auf die Position des Kastenbodens ist, der in seiner abgesenkten Position verharrt. Nachdem das Fahrzeugverdeck seine geschlossene Position erreicht hat, wird der Verdeckkastendeckel 7 wieder geschlossen, wodurch auch die Arretiereinrichtung zwischen Kastenbodenkinematik und Kastenboden wieder in ihre Arretierstellung überführt wird und somit jede Bewegung der Kastenbodenkinematik unmittelbar auf den Kastenboden übertragen wird. Im Anschluss hieran wird der Spannbügel 3 aus einer angehobenen Position nach hinten in die Spannposition überführt, in der der Spannbügel unmittelbar auf dem Verdeckkastendeckel aufliegt. Diese Bewegung des Spannbügels 3 wird über das Übertragungsglied zwischen Spannbügel und Kastenbodenkinematik auf den Kastenboden übertragen, der aus seiner abgesenkten Position in die angehobene Position überführt wird.

Wie Fig. 2 zu entnehmen, besteht die Kastenbodenkinematik 8, über die der Kastenboden 6 aus der gezeigten angehobenen Position in eine abgesenkte Position zu verstellen ist, aus einem Antriebslenker 15, einem Zwischenlenker 16 sowie einem Kastenbodenlenker 17, wobei über die Lenker 15 bis 17 die Aufstellbewegung des Spannbügels 3 in Pfeilrichtung 13 über den ersten Bowdenzug 12 auf den Kastenboden 6 übertragen wird und dieser aus der in der angehobenen Position gehaltenen Stellung gelöst wird, so dass der Boden 6 auf Grund der auf ihn wirkenden Kräfte - Gewichtskräfte und/oder Federkräfte - abgesenkt werden kann. Der Antriebslenker 15 ist an einem fest mit der Fahrzeugkarosserie verbundenen Bügel 18 schwenkbar um eine Schwenkachse 15a gelagert. Der Antriebslenker 15 ist zweiflügelig ausgebildet, wobei an einem ersten Flügel ein Ende des ersten Bowdenzuges 12 angreift, über den die Absenkbewegung des Kastenbodens 6 gesteuert wird. Am gegenüberliegenden zweiten Flügel des Antriebslenkers 15 ist der Zwischenlenker 16 schwenkbar um eine weitere Schwenkachse 15b mit dem Antriebslenker 15 verbunden. Auf der dem Antriebslenker 15 abgewandten Seite ist an dem Zwischenlenker 16 der Kastenbodenlenker 17 über eine Schwenkachse 16a gelenkig angebunden. Der Kastenbodenlenker 17 ist in Arretierposition fest mit dem Kastenboden 6 verbunden, so dass Kastenbodenlenker 17 und Kastenboden 6 bei der Überführung zwischen angehobener und abgesenkter Lage jeweils die gleiche Schwenkbewegung um die karosseriefeste Schwenkachse 11 des Kastenbodens 6 ausführen.

In der in Fig. 2 gezeigten angehobenen Position des Kastenbodens 6, welcher der Schließstellung des Fahrzeugverdecks 1 entspricht, nehmen der Zwischenlenker 16 sowie der dem Zwischenlenker zugeordnete Flügel des Antriebslenkers 15 eine gemeinsame Strecklage ein, in welcher der Zwischenlenker 16 und der zugeordnete Flügel des Antriebslenkers 15 etwa in einer gemeinsamen Längsachse liegen. Dadurch stellt die angehobene Position des Kastenbodens eine stabile Lage dar, so dass der erste Bowdenzug 12 von Kräften entlastet ist, welche aus der Ruhestellung des Kastenbodens in angehobener Lage resultieren könnten.

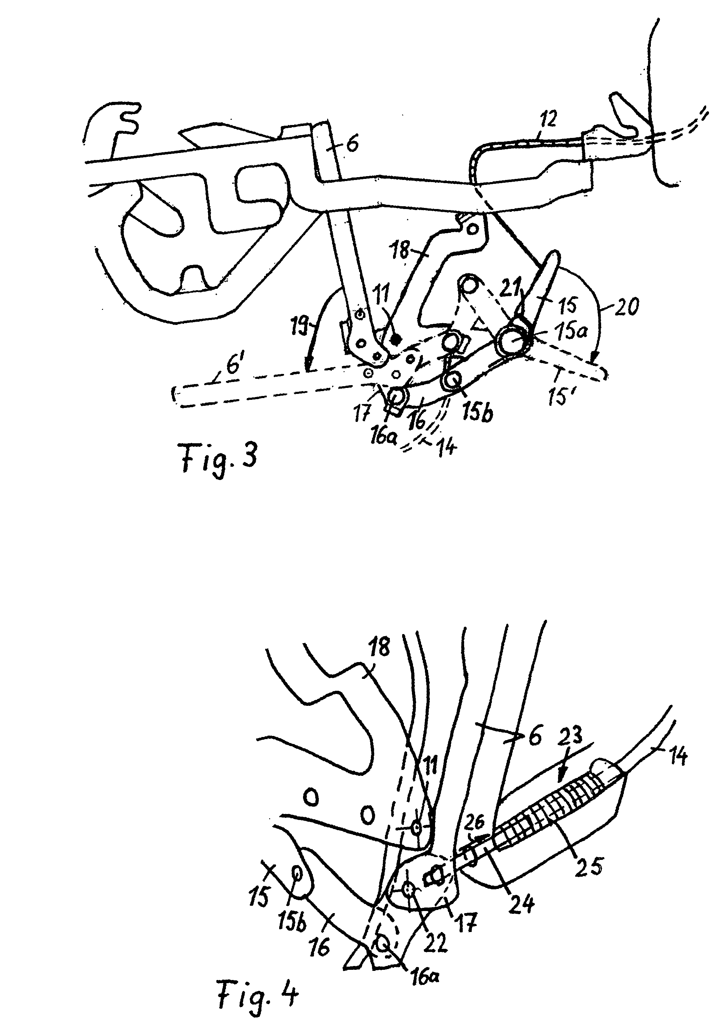

In Fig. 3 ist zusätzlich zu der angehobenen Lage des Kastenbodens 6 auch dessen abgesenkte Lage dargestellt, welche mit strichlierter Linie eingezeichnet ist, wobei die Bauteile in abgesenkter Position mit einem Apostroph gekennzeichnet sind. Der Kastenboden 6 ist um seine karosseriefeste Schwenkachse 11 in Pfeilrichtung 19 aus der angehobenen in die abgesenkte Lage zu verschwenken. Diese Verschwenkbewegung wird ausgelöst durch eine Schwenkbewegung des Antriebslenkers 15 in Pfeilrichtung 20, die durch ein Nachgeben des haltenden Bowdenzuges 12 infolge der Aufstellbewegung des Spannbügels ermöglicht wird. Die Auslösung der Absenkbewegung der Kastenbodens 6 kann hierbei durch eine Schenkelfeder 21, welche den Antriebslenker 15 um seine Schwenkachse 15a beaufschlagt, sowie durch das Eigengewicht des Kastenbodens unterstützt werden.

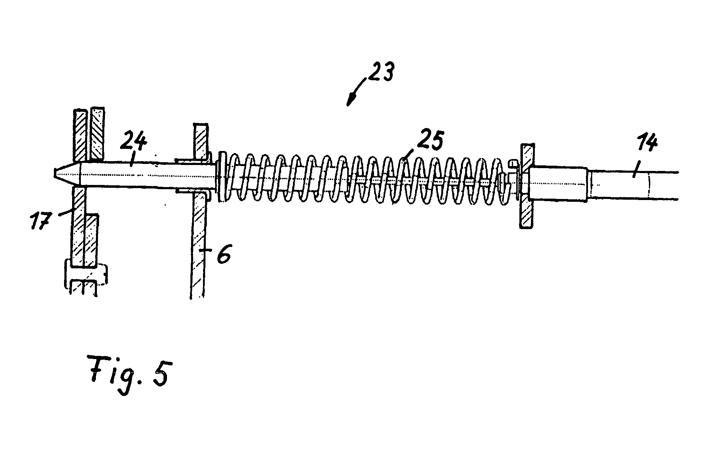

Fig. 4 zeigt eine perspektivische Darstellung der Kastenbodenkinematik 8 für den Kastenboden 6 einschließlich einer Arretierungseinrichtung 23 zur lösbaren Verriegelung zwischen Kastenbodenkinematik und Kastenboden. Die Arretierungseinrichtung 23 umfasst einen horizontal gelagerten, translatorisch verschiebbaren Arretierbolzen 24, welche von einer Feder 25 in seine Arretierstellung beaufschlagt ist, in der der am Kastenboden 6 gelagerte Arretierbolzen 24 den Kastenboden mit dem Kastenbodenlenker 17 fest verriegelt. Der Kastenbodenlenker 17 weist gegenüber dem Kastenboden 6 eine Schwenkachse 22 auf, um die der Kastenbodenlenker 17 in gelöster Stellung des Arretierbolzens 24 bei unveränderter Position des Kastenbodens 6 frei verschwenkbar ist.

Die Feder 25 beaufschlagt den Arretierbolzen 24 in seine Arretierstellung, in der eine Relativbewegung zwischen Kastenboden 6 und Kastenbodenlenker 17 ausgeschlossen ist, da die Relativschwenkbewegung um die Schwenkachse 22 durch den mit Abstand zur Schwenkachse 22 verlaufenden Arretierbolzen 24 unterbunden wird. Bei einer Betätigung des zweiten Bowdenzuges 14 wird der Arretierbolzen 24 in Pfeilrichtung 26 aus seiner Arretierstellung zurückgezogen, so dass eine Relativschwenkbewegung des Kastenbodenlenkers 17 um seine Schwenkachse 22 relativ zum Kastenboden 6 ermöglicht ist.

Fig. 5 zeigt eine detaillierte Darstellung der Arretierungseinrichtung 23 mit dem von der Feder 25 in Arretierstellung beaufschlagten Arretierbolzen 24, der durch eine Ausnehmung in der Wandung des Kastenbodens 6 sowie in der Wandung des Kastenbodenlenkers 17 geführt ist und dadurch eine Relativbewegung zwischen diesen Bauteilen blockiert.

## Patentansprüche

1. Verdeckkasten zur Aufnahme eines verstellbaren Fahrzeugverdecks, mit einem Verdeckkastendeckel (7), der zur Überführung des Fahrzeugverdecks (1) zwischen geschlossener und geöffneter Position über eine Deckelkinematik (9) zu öffnen und zu verschließen ist, wobei der Kastenboden (6) des Verdeckkastens über eine Kastenbodenkinematik (8) zwischen einer der geschlossenen Position des Fahrzeugverdecks (1) zugeordneten angehobenen Lage und einer der geöffneten Position zugeordneten abgesenkten Lage zu verstellen ist, dass die Kastenbodenkinematik (8) mit dem Fahrzeugverdeck (1) gekoppelt ist, wobei bei der Überführung des Fahrzeugverdecks (1) von der geschlossenen in die geöffnete Position die Bewegung eines Bauteils 3) des Fahrzeugverdecks (1) die Absenkung des Kastenbodens (6) auslöst,
**dadurch gekennzeichnet,**
**dass** der abgesenkte Kastenboden (6) von seiner Kastenbodenkinematik (8) entkoppelbar ist.

2. Verdeckkasten nach Anspruch 1,
**dadurch gekennzeichnet,**
**dass** die Kastenbodenkinematik (8) mit dem Verdeckkastendeckel (7) in der Weise wirkverbunden ist, dass die Öffnungsbewegung des Verdeckkastendeckels (7) die Entkopplung von Kastenboden (6) und Kastenbodenkinematik (8) auslöst.

3. Verdeckkasten nach Anspruch 1 oder 2,
**dadurch gekennzeichnet,**
**dass** zumindest ein Bauteil (17) der Kastenbodenkinematik (8) schwenkbar mit dem Kastenboden (6) koppelbar ist und dass ein lösbarer Arretierbolzen (24) zwischen dem Bauteil (17) der Kastenbodenkinematik (8) und dem Kastenboden (6) vorgesehen ist.

4. Verdeckkasten nach Anspruch 3,
**dadurch gekennzeichnet,**
**dass** der Arretierbolzen (24) in seine Arretierstellung kraftbeaufschlagt ist.

5. Verdeckkasten nach Anspruch 2 und 3 oder 4,
**dadurch gekennzeichnet,**
**dass** zwischen dem Verdeckkastendeckel (7) und dem Arretierbolzen (24) ein Übertragungsglied (14) vorgesehen ist.

6. Verdeckkasten nach Anspruch 5,
**dadurch gekennzeichnet,**
**dass** das Übertragungsglied ein Bowdenzug (14) ist.

7. Verdeckkasten nach einem der Ansprüche 1 bis 6,
**dadurch gekennzeichnet,**
**dass** der Kastenboden (6) um eine karosseriefeste Schwenkachse (11) schwenkbar gelagert ist und in angehobener Lage näherungsweise senkrecht und in abgesenkter Lage näherungsweise horizontal im Fahrzeug angeordnet ist.

8. Verdeckkasten nach einem der Ansprüche 1 bis 7,
**dadurch gekennzeichnet,**
**dass** der Kastenboden (6) in seine abgesenkte Lage kraftbeaufschlagt ist, wobei der Kastenboden (6) in angehobener Lage von einem mit dem Fahrzeugverdeck (1) verbundenen Stellglied (12) gehalten ist.

9. Verdeckkasten nach Anspruch 8,
**dadurch gekennzeichnet,**
**dass** das Stellglied (12) mit einem Spannbügel (3) des Fahrzeugverdecks (1) verbunden ist.

10. Verdeckkasten nach Anspruch 8 oder 9,
**dadurch gekennzeichnet,**
**dass** das Stellglied ein Bowdenzug (12) ist.

11. Verdeckkasten nach einem der Ansprüche 1 bis 10,
**dadurch gekennzeichnet,**
**dass** der Kastenbodenkinematik (8) ein schwenkbar an der Karosserie gelagerter Antriebslenker (15) zugeordnet ist.

12. Verdeckkasten nach Anspruch 11,
**dadurch gekennzeichnet,**
**dass** der Antriebslenker (15) einen am Kastenboden (6) schwenkbar gelagerten Kastenbodenlenker (17) beaufschlagt.

13. Verdeckkasten nach Anspruch 12,
**dadurch gekennzeichnet,**
**dass** zwischen Antriebslenker (15) und Kastenbodenlenker (17) ein schwenkbarer Zwischenlenker (16) angeordnet ist, wobei in der angehobenen Lage des Kastenbodens (6) der Antriebslenker (15) und der Zwischenlenker (16) eine gemeinsame Strecklage einnehmen.

14. Verdeckkasten nach einem der Ansprüche 11 bis 13,
**dadurch gekennzeichnet,**
**dass** der Antriebslenker (15) von einer Schenkelfeder (25) kraftbeaufschlagt ist.

## Claims

1. Folding-top compartment for accommodating a displaceable vehicle folding top, having a folding-top-compartment cover (7) which is to be opened and to be closed via a cover kinematics (9) in order to transfer the vehicle folding top (1) between a closed and open position, in which the compartment floor (6) of the folding-top compartment is to be displaced via a compartment-floor kinematics (8) between a raised position, which is assigned to the closed position of the vehicle folding top (1), and a lowered position, which is assigned to the open position, by the compartment-floor kinematics (8) being coupled to the vehicle folding top (1), and in which, during the transfer of the vehicle folding top (1) from the closed position into the open position, the movement of one component (3) of the vehicle folding top (1) initiates the lowering of the compartment floor (6), **characterized in that** the lowered compartment floor (6) can be decoupled from its compartment-floor kinematics (8).

2. Folding-top compartment according to Claim 1, **characterized in that** the compartment-floor kinematics (8) is operatively connected to the folding-top-compartment cover (7) in such a manner that the opening movement of the folding-top-compartment cover (7) triggers the decoupling of the compartment floor (6) and compartment-floor kinematics (8).

3. Folding-top compartment according to Claim 1 or 2, **characterized in that** at least one component (17) of the compartment-floor kinematics (8) can be coupled pivotably to the compartment floor (6), and **in that** a releasable locking bolt (24) is provided between the component (17) of the compartment-floor kinematics (8) and the compartment floor (6).

4. Folding-top compartment according to Claim 3, **characterized in that** the locking bolt (24) is driven into its locking position.

5. Folding-top compartment according to Claims 2 and 3 or 4, **characterized in that** a transmission element (14) is provided between the folding-top-compartment cover (7) and the locking bolt (24).

6. Folding-top compartment according to Claim 5, **characterized in that** the transmission element is a Bowden cable (14).

7. Folding-top compartment according to Claims 1 to 6, **characterized in that** the compartment floor (6) is mounted pivotably about a pivot axis (11) fixed on the bodywork and, in the raised position, is arranged approximately vertically and, in the lowered position, is arranged approximately horizontally in the vehicle.

8. Folding-top compartment according to one of Claims 1 to 7, **characterized in that** the compartment floor (6) is driven into its lowered position, the compartment floor (6) being held in the raised position by an adjusting element (12) which is connected to the vehicle folding top (1).

9. Folding-top compartment according to Claim 8, **characterized in that** the adjusting element (12) is connected to a clamping clip (3) of the vehicle folding top (1).

10. Folding-top compartment according to Claim 8 or 9, **characterized in that** the adjusting element is a Bowden cable (12).

11. Folding-top compartment according to one of Claims 1 to 10, **characterized in that** the compartment-floor kinematics (8) is assigned a driving link (15) mounted pivotably on the bodywork.

12. Folding-top compartment according to Claim 11, **characterized in that** the driving link (15) acts upon a compartment-floor link (17) mounted pivotably on the compartment floor (6).

13. Folding-top compartment according to Claim 12, **characterized in that** a pivotable intermediate link (16) is arranged between the driving link (15) and compartment-floor link (17), the driving link (15) and the intermediate link (16) taking up a common extension position in the raised position of the compartment floor (6).

14. Folding-top compartment according to one of Claims 11 to 13, **characterized in that** the driving link (15) is driven by a leg spring (25).

## Revendications

1. Compartiment à capote pour accueillir une capote de véhicule réglable, le compartiment à capote comportant un couvercle (7) que l'on peut ouvrir et fermer par l'intermédiaire d'un organe de transmission cinématique (9) du couvercle pour faire se déplacer la capote (1) de véhicule entre une position fermée et une position ouverte, le fond (6) du compartiment à capote pouvant être réglé entre une position surélevée associée à la position fermée de la capote (1) de véhicule et une position abaissée associée à la position ouverte par l'intermédiaire d'un organe de transmission cinématique (8) du fond du compartiment, l'organe de transmission cinématique (8) du fond du compartiment étant couplé à la capote (1) de véhicule, le mouvement d'une pièce (3) de la capote (1) de véhicule lors du passage de la capote (1) de véhicule de la position fermée à la position ouverte provoquant l'abaissement du fond (6) du compartiment,
**caractérisé en ce**
**que** le fond (6) du compartiment abaissé est apte à être découplé de son organe de transmission cinématique (8) du fond du compartiment.

2. Compartiment à capote selon la revendication 1,
**caractérisé en ce**
**que** l'organe de transmission cinématique (8) du fond du compartiment agit conjointement avec le couvercle (7) du compartiment à capote de telle sorte que le mouvement d'ouverture du couvercle (7) du compartiment à capote provoque le découplage du fond (6) du compartiment d'avec l'organe de transmission cinématique (8) du fond du compartiment.

3. Compartiment à capote selon la revendication 1 ou 2,
**caractérisé en ce**
**qu'**au moins une pièce (17) de l'organe de transmission cinématique (8) du fond du compartiment est adaptée pour être reliée au fond (6) du compartiment de manière mobile en pivotement et qu'il est prévu un boulon d'arrêt (24) desserrable entre la pièce (17) de l'organe de transmission cinématique (8) du fond du compartiment et le fond (6) du compartiment.

4. Compartiment à capote selon la revendication 3,
**caractérisé en ce**
**qu'**une force est appliquée sur le boulon d'arrêt (24) lorsque celui-ci est en position d'arrêt.

5. Compartiment à capote selon la revendication 2 et 3 ou 4,
**caractérisé en ce**
**qu'**il est prévu un organe de transmission (14) entre le couvercle (7) du compartiment à capote et le boulon d'arrêt (24).

6. Compartiment à capote selon la revendication 5,
**caractérisé en ce**
**que** l'organe de transmission est un câble Bowden (14).

7. Compartiment à capote selon l'une quelconque des revendications 1 à 6,
**caractérisé en ce**
**que** le fond (6) du compartiment est monté pivotant autour d'un axe de pivotement (11) solidaire de la carrosserie et qu'il est disposé dans le véhicule de manière à être approximativement vertical en position surélevée et approximativement horizontal en position abaissée.

8. Compartiment à capote selon l'une quelconque des revendications 1 à 7,
**caractérisé en ce**
**qu'**une force est appliquée sur le fond (6) du compartiment lorsque celui-ci est en position abaissée, le fond (6) du compartiment étant retenu en position surélevée par un actionneur (12) relié à la capote (1) de véhicule.

9. Compartiment à capote selon la revendication 8,
**caractérisé en ce**
**que** l'actionneur (12) est relié à un étrier de serrage (3) de la capote (1) de véhicule.

10. Compartiment à capote selon la revendication 8 ou 9,
**caractérisé en ce**
**que** l'actionneur est un câble Bowden (12).

11. Compartiment à capote selon l'une quelconque des revendications 1 à 10,
**caractérisé en ce**
**qu'**une bielle motrice (15) montée mobile en pivotement sur la carrosserie est associée à l'organe de transmission cinématique (8) du fond du compartiment.

12. Compartiment à capote selon la revendication 11,
**caractérisé en ce**
**que** la bielle motrice (15) sollicite une bielle (17) du fond du compartiment qui est montée mobile en pivotement sur le fond (6) du compartiment.

13. Compartiment à capote selon la revendication 12,
**caractérisé en ce**
**qu'**une bielle intermédiaire (16) pivotante est disposée entre la bielle motrice (15) et la bielle (17) du fond du compartiment, la bielle motrice (15) et la bielle intermédiaire (16) adoptant une position déployée commune lorsque le fond (6) du compartiment se trouve en position surélevée.

14. Compartiment à capote selon l'une quelconque des revendications 11 à 13,
**caractérisé en ce**
**qu'**une force est appliquée par un ressort à branches (25) sur la bielle motrice (15).
